(19) **Europäisches Patentamt**
**European Patent Office**
**Office européen des brevets**

(11) **EP 3 955 130 A1**

(12) **EUROPEAN PATENT APPLICATION**

(43) Date of publication:
**16.02.2022 Bulletin 2022/07**

(21) Application number: **20190743.3**

(22) Date of filing: **12.08.2020**

(51) International Patent Classification (IPC):
**G06F 16/35** (2019.01)  **G06F 16/93** (2019.01)
**G06K 9/00** (2022.01)

(52) Cooperative Patent Classification (CPC):
**G06F 16/355; G06K 9/6219; G06K 9/6223;**
**G06V 30/40; G06V 30/412; G06V 30/414;**
**G06V 30/418**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **CANDIS GmbH**
**10559 Berlin (DE)**

(72) Inventors:
• **Proschka, Anthony**
**10119 Berlin (DE)**

• **Deepak, Mishra**
**14059 Berlin (DE)**
• **Ramanan, Merlyn**
**10559 Berlin (DE)**
• **Baratashvili, Zurab**
**10963 Berlin (DE)**

(74) Representative: **Grünecker Patent- und**
**Rechtsanwälte**
**PartG mbB**
**Leopoldstraße 4**
**80802 München (DE)**

(54) **TEMPLATE-BASED DOCUMENT EXTRACTION**

(57) A computer-implemented method for extraction of structured data from unstructured documents is described. The method comprises receiving a document, employing a template detector to determine whether the document matches a template from a plurality of templates, and in response to determining that no template matches the document, re-training the template detector to add the document as a new template. The disclosed approach may be applied to extract information from unstructured documents that consistently contain specific structured information, such as financial documents, medical bills, or administrative documents.

FIG. 6

EP 3 955 130 A1

**Description**

In this disclosure, a template-based document extraction method is described that allows for construction of a computer-implemented system that is able to reliably extract fields from diverse, especially financial, documents.

For the problem of document extraction, approaches using machine learning and deep learning have been proposed. However, financial documents, such as invoices, usually vary in many subtle differences in layout and text and these machine learning and deep learning approaches often suffer from low robustness in a live production system. These approaches are usually able to extract information from prominent firms that send out many invoices, but fail to reliably extract from financial documents that originate from small and medium enterprises. In Germany alone, there are about 3 million businesses sending invoices with custom layout to German business customers. Being carriers of sensitive information, mishandling of invoices can be expensive or dangerous, such as causing transferring excess funds to a supplier, making payments to erroneous bank accounts or engaging in multiple payments for the same invoice.

The disclosed approach is based on templates that allow classification of documents to appropriate extraction rules. Detecting which template an incoming document belongs to and hence which extraction rules apply is a classification problem. Well-known methods for text classification rely on Naive Bayes, Support Vector Machines, Decision Trees, k-Nearest Neighbor, or logistic regression. However, for the present context of classifying financial documents a more specific approach is required.

Moreover, known template-based approaches rely on manual generation of templates. While creating templates for the top 500 senders of financial documents typically allows for extraction of a fraction of 30% of all invoices, the long tail of documents of small and medium enterprises with specific layouts implies that improving a template-based system to automatically extract 70% of all documents would require hundreds or thousands of templates.

In the context of business documents, automatically clustering documents to create templates based on unique features within a set of documents has been addressed by Stöckerl et al, 2015, "Online template matching over a stream of digitized documents", ACM International Conference Proceeding Series, 2015. These templates are then used as a reference for classifying future documents.

Other forms of document classification of the prior art use content recognition methods, such as wordpos, and graphical representation, such as zoneseg, or rely on pattern recognition techniques. Employing structural similarity between documents on the basis of layout and spatial placement to yield a matching similarity score in [0,1] is described in Kumar et al.: "Structural similarity for document image classification and retrievaf", Pattern Recognition Letters, 43(1):119-1026). However, these prior art approaches usually rely on the presence of labelled data.

Unsupervised methods have been proposed by using Genetic Programming for feature extraction and refinement as described in N. Revathi et. al.: "Web Text Classification Using Genetic Algorithm and a Dynamic Neural Network Modef". 2(2):436-442. Deep learning and artificial neural networks were applied to the problem by Rasmus Berg Palm et al.: "CloudScan - A configuration-free invoice analysis system using recurrent neural networks", CoRR, abs/1708.07403. 2017, and Anoop R. Katti et. al.: "Chargrid: Towards understanding 2d documents", CoRR, abs/1809.08799.2018.

Other approaches use pixel representations of documents to classify the documents, as described in Siyuan Chen: "Structured document classification by matching local salient features", pages 653-656, 01., Jayant Kumar: "Structural similarity for document image classification and retrievaf", or Albert Gordo et al.:"Large-scale document image retrieval and classification with runlength histograms and binary embeddings", Pattern Recognition, 46:1898-1905.

The approach of this disclosure directly extends the work on template-based extraction of business documents, such as Schuster et al.:"Intellix - end-user trained information extraction for document archiving", 2013, ITESOFT described in Rusinol et al.: "Field extraction from administrative documents by incremental structural templates", pages 1100-1104, smartFIX described in Andreas Dengel and Bertin Klein: "smartFIX: A requirements-driven system for document analysis and understanding" and the systems described by Francesca Cesarini et al.: "Analysis and understanding of multi-class invoices", IJDAR 6:102-114, 10 20102 and Eric Medvet et al.: "A probabilistic approach to printed document understanding", IJDAR, 14:335-347.

However, the latter prior art methods often require specific and fine-grained manual annotations of documents, such as exact (x,y)-coordinates of bounding boxes in which a particular field is found in a document.

## SUMMARY

In this disclosure, methods and systems for template-based document extraction involving automatic generation of templates are described. The system is configured to classify the documents, extract its information, and assure the quality of the extractions. For document classification, a template-based approach is described. A method of automatic labelling of documents is proposed that allows automatic detection of templates and classification of incoming documents.

The disclosed approach is exemplarily described as applied to extract information from financial documents. The disclosed approach may however be applied generally to unstructured documents that consistently contain specific structured information, such as medical bills, judgements in civil law or criminal law, or administrative documents.

The described approach allows generating templates with as little as one training sample, and only requires the ground truth field values instead of detailed annotations such as bounding boxes that are hard to obtain.

A computer-implemented method for extraction of structured data from unstructured documents is described, comprising receiving a document, employing a template detector to determine whether the document matches a template from a plurality of templates, and in response to determining that no template matches the document, re-training the template detector to add the document as a new template. In response to determining that the document matches the template, the method may further comprise comparing the document and the template to identify document-specific pixels, and recognizing in raw text of the document corresponding to the document-specific pixels a pattern corresponding to a predefined field, and extracting a value for the predefined field.

In an aspect, the template detector comprises a template database and re-training the template detector comprises adding the document as a new template to the template database. Determining whether the document matches one of the templates may comprise calculating a matching score between the document and templates of the template database, wherein the matching score is based on non-blank regions in the document matching a template mask of the template. Calculating the matching score between the document and the template may comprise determining the matching score as the share of matching pixels in the non-blank regions. If the document and the template do not have a same resolution, the matching score may be determined as zero.

In another aspect, the template detector comprises a tree, wherein leaf nodes of the tree each comprise a plurality of clustering feature entries corresponding to the plurality of templates. Determining whether the document matches a template group from a plurality of template groups may comprise finding a closest leaf node for the features of the document and determining whether the document can be subsumed under the leaf node without violating a threshold condition. Re-training the template detector may comprise adding the features of the document to a new leaf node and updating clustering features for all nodes from the new leaf node to the tree root. In an embodiment, the tree is constructed employing a BIRCH clustering algorithm.

According to another embodiment, recognizing in the raw text of the document the pattern corresponding to a predefined field is based on applying a regular expression specific to the template matching the document.

In an aspect, the pattern is based on tokens preceding and succeeding the predefined field.

In embodiments, the predetermined fields comprises one of an amount, a document identification number, a document date, a sender name, a tax rate, a payment due date, an IBAN, a VAT registration number, a payment state, a document type, or a currency.

In a further aspect, a confidence score for the extracted value may be determined. In embodiments, the document and the extracted values may be displayed in a graphical user interface, wherein displaying the extracted values includes displaying the respective confidence score for each extracted value.

## BRIEF DESCRIPTION OF THE FIGURES

Figure 1 illustrates a sample document with marked regions of document-specific pixels as extracted by the disclosed approach;

Figure 2 illustrates a block diagram of a system for template-based document extraction;

Figure 3 reproduces pseudo-code for a method for template-based document extraction;

Figure 4 reproduces pseudo-code for a method for generation of extraction rules for automated document extraction;

Figure 5 illustrates a block diagram of another system for template-based document extraction;

Figure 6 illustrates a method for template-based document extraction; and

Figure 7 illustrates a block diagram for a computing system configured for template-based document extraction.

## DETAILED DESCRIPTION

A template is a distinct document format or a layout that forms a representation for a subset of documents that can be extracted by the same extraction rules. Typically, templates are unique to senders of the documents. However, in some cases multiple senders can have the same template, or multiple templates can correspond to one sender. The disclosed methods and systems are based on generating a template mask for each template and storing extraction rules specific for this template and template mask. Template masks may correspond to non-blank header regions of a subgroup of documents that correspond to the template, such as all documents from a particular sender who employs a specific letterhead.

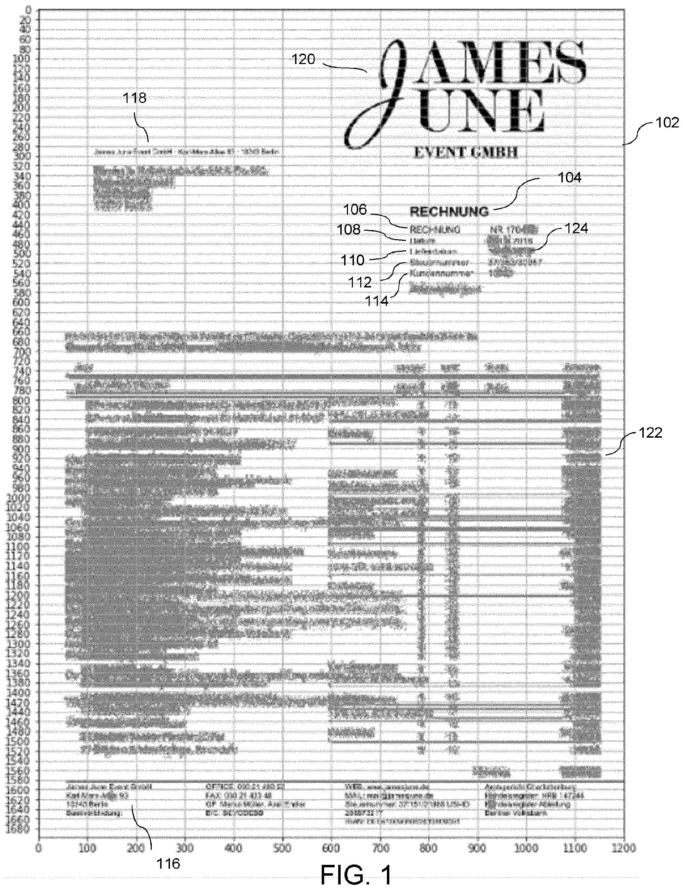

Figure 1 shows a sample document 102 which is an invoice ('*Rechnung*'). Incoming document 102 is characterized by a source classification that classifies whether the document is a native PDF, a scanned document or a sandwich document. The incoming document can be further classified by a document type, such as invoice or credit note. The document type typically corresponds to a purpose the document serves. In the example of Figure 1, document 102 has a document type of invoice.

Document 102 may also be classified by the language used. In examples, documents from a same sender may correspond to different templates when the documents are written in different languages.

Document extraction in the present disclosure relates to extracting structured data corresponding to predefined fields usually contained in financial documents. In an embodiment, the predefined fields comprise fields of an amount, a document identification number, a document date, a sender name, a tax rate, a payment due date, an IBAN, a VAT registration number, a payment state, a document type and a currency. For each field, a specific method of extraction is required that may depend on the template the document belongs to.

The disclosed approach relies on comparing all documents falling under a particular template pixel-wise, and generating template masks based on the regions where the pixels between the documents are identical across all documents in the particular template. Document 102 is expected to encompass pixels that are identical with that of the template mask of a template the document falls under. This approach is particularly reliable for native PDF documents that are resistant to pixel variations which affect manually scanned documents.

Template-specific regions are pixels that documents of a template have in common, as compared to pixels that all documents belonging to a document type have in common.

For example, template-specific pixels for invoices are pixels that all invoices of a particular sender have in common. To obtain template specific pixels, pixels within the documents of a particular document type are identified that are specific only to a subset of documents of the document type. The template specific pixels distinguish these documents from the rest of the documents of the document type.

Figure 1 shows document-specific pixels 122, 124 marked in grey. The inverse of the document-specific pixels 122, 124 marked in grey are the template-specific pixels. According to an embodiment, only non-white pixels inverse to document-specific pixels 122, 124 are considered as template-specific pixels.

Because all invoices of this specific sender, '*James June Event GmbH'*, share the pixels of '*Rechnung*' 104, '*Rechnung*' 106, '*Datum*' 108, '*Lieferdatum*' 110, '*Steuernummer*' 112, '*Kundennummer*' 114, as well as the address of the firm on *Karl-Marx-Allee 116,118* and the company logo 120, these pixels are not specific to document 102, but are template-specific, occurring in all invoices by the specific sender James June Event GmbH.

When determining document specific pixels, a fault tolerance may be included by allowing pixel matches of an incoming document to the pixels of the template mask within the variance of a rectangular area of a grid.

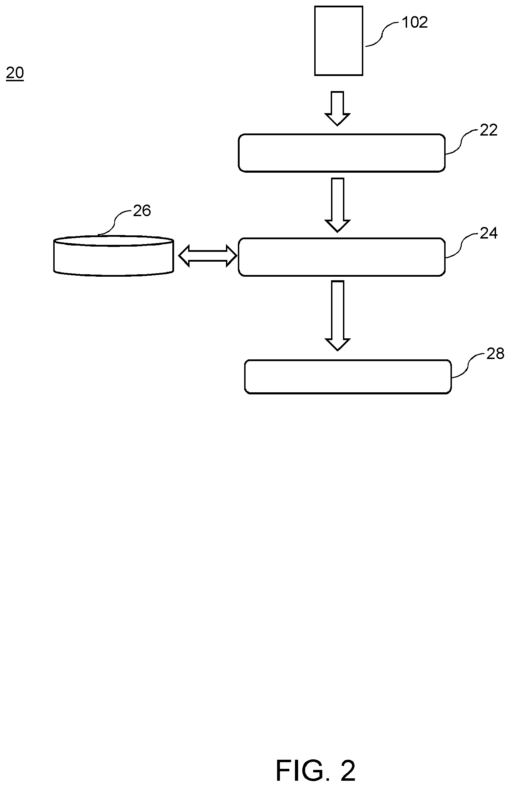

Figure 2 illustrates a block diagram of a system 20 for automatic detection of templates. System 20 may be deployed as part of a commercial accounting software. Document 102 is inputted to feature analyzer 22 which extracts features, such as non-blank header regions of document 102, and provides these to template detector 24. Template detector 24 determines whether document 102 matches a template from template database 26 and, if so, returns the matching template to field extractor 28.

If, however, no matching template is identified from among the templates stored in template database 26, template detector 26 adds document 102 as a new template to template database 26. Therefore, system 20 for automatic labelling of documents involves automatic template detection which implies that not every template that is to be detected in a production setting is required for training, i.e. system 20 can be used in a production setting even though template database 26 does not yet cover all documents the system eventually processes.

Document extractor 28 is configured for detecting the presence of particular fields in document 102 and extracting the values of the detected fields from the raw text of document 102. For some of the fields, the method of extraction depends on the template document 102 matches to.

The fields to be extracted fall under three extraction methods that correspond to fields that can be represented in a finite version of syntax in a text, fields that can be extracted by detecting a constant preceding and succeeding token and a text of the matching template, and fields that can be extracted by deductions based on unstructured text.

Fields of the first group, are for example the IBAN number, currency and the VAT identification number, because these fields appear in a distinct and finite set of pattern. For example, the IBAN number can be identified by employing the global regular expression

$$[A-Z]\{2\}\backslash s*[0-9]\{2\}\backslash s*[0-9]\{4\}\backslash s*[0-9]\{4\}\backslash s*[0-9]\{4\}\backslash s*[0-9]\{4\}$$
$$\backslash s*[0-9]\{2,4\}$$

Other fields, such as document type and payment state do not have values appearing in the text as tokens, but require analysis of the document to deduce their value. Extracting these fields requires finding specific combinations of tokens or lack of specific combinations of tokens in the raw text of the document. Rules for extracting the document type and the payment state were determined by analyzing patterns and archived documents, yielding broad rules for deducing the document type and the payment state of an incoming document.

Extraction rules for other fields, such as amount and document date, depend on the specific template. To determine these rules for each template, manual extraction of at least one document falling under the template is required. Extracted values from this document are used to infer regular expressions based on the raw text of the document for which manual extraction is available and preceding and succeeding tokens of the matches. For the field 'amount', the capturing group

[0-9]{1,2}\.[0-9]{1,2}\.[0-9]{2,4}|[0-9]{1,2}[0-9]{1,2}[0-9]{2,4}| [0-9]{1,2}\/[0-9]{1,2}\/[0-9] {2,4}|[0-9]{1,2}[A-zäüö]{3}[0-9] {4}| [0-9]{1,2}\s+ [A-Za-zäöüÄÖÜ]+\s+ [0-9]{2,4}| [0-9]{1,2}\. [A-zäüö]{3} [9-9]{4}|[A-z]{3} [0-9]{1,2}, [0-9]{4} | [0-9]{4}[A-z]{3}[0-9]{1 ,2}

can be employed.

Furthermore, to achieve optimal extraction, steps of preprocessing the text and the ground truth are required. For the field of 'amount', the separator used to represent the demarcation of decimal positions differs from document to document based on the language and the number of digits present in the value of the amount.

For the field 'document date', most of Europe uses DD/MM/YY, while Japan uses the format YY/MM/DD and the United States use MM/DD/YY. Furthermore, the separator may be slashes, dashes or periods. Therefore, ascertaining the counterpart for the ground truth document date pattern within the context of the different variations the field of 'document date' appears in a text, is difficult, requiring compiling regular expressions for date patterns that are representative of the majority of the documents. Different regex patterns were gathered and compiled, allowing optimization of extraction of this field. Accordingly, for the field 'document date', template-specific regular expressions have been identified. The template-specific regular expressions contain a global field pattern matching the date, and preceding and succeeding regular expressions that respectively match template-specific preceding and succeeding patterns. The global field pattern is identical for all templates, while the preceding and succeeding regular expressions are adapted to particular templates, but are not part of the information to be extracted.

In other embodiments, system 20 is configured to extract structured information from medical bills. In addition to the fields as described above for general financial documents, fields to be extracted from medical bills may comprise a name of a patient, a patient's birth date, a patient number, date of surgery, a fee schedule number, such as a GOÄ number, a treatment indication, or a multiplying factor.

In other embodiments, system 20 is configured to extract structured information from judgements in civil law. In this embodiment, fields to be extracted may comprise names of representatives, name of the court, identities of plaintiff and respondent, or an indemnity amount. In this embodiment, system 20 is configured to extract structured information from judgements in civil law. In this embodiment, fields to be extracted may comprise names of representatives, name of the court, identity of the accused, or criminal conviction.

In other embodiments, system 20 may be configured to extract structured information from administrative documents, such as administrative acts. In a particular embodiment, system 20 is configured to extract structured information from tax bills. In this embodiment, fields to be extracted may comprise tax liability amount, already paid tax liability amount, or tax-deductible expenses.

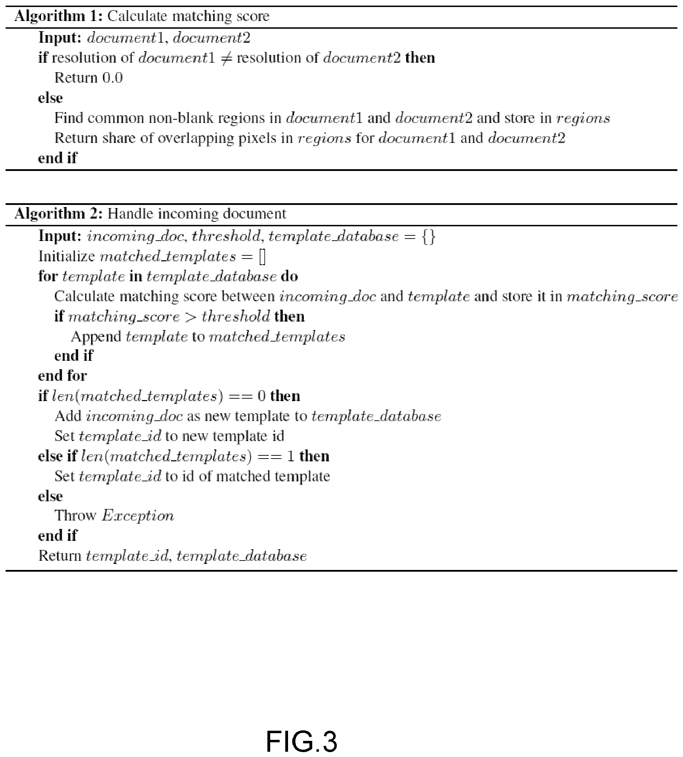

Figure 3 reproduces algorithms corresponding to system 20 for automatic document extraction and template generation. Algorithm 1 calculates a matching score of two documents, document1 and document2. If the resolutions of the two documents do not match, the matching score of zero is returned. Native PDF documents of the same template are hence assumed to have the same two-dimensional resolution, because only documents with the same resolution can be matched under a single template.

If the resolutions of the two documents match, common non-blank regions in the two documents are found and a share of overlapping pixels in the common non-blank regions is calculated. When one of the documents, e.g. document2, is a document of a template or a template mask of a template, the overlapping pixels thus represent pixels matching the template mask and are therefore recognized as template-specific pixels. The inverse of these pixels then provides the document-specific pixels which include fields to be extracted.

In other embodiments, Algorithm 1 may only consider the documents' non-blank header regions, so that the matching score is determined as the share of overlapping non-blank header regions in the documents. Most business documents have a header section holding information such as logos and addresses. Hence, considering non-blank header regions for calculating the matching score is based on the observation that, regardless of the template, the documents have more white pixels that are identical across all documents. Therefore, these white pixels cannot be considered as template specific or document specific.

Hence, Algorithm 1 produces a similarity metric between a template, i.e. a document from the template or a template mask of the template, with an incoming document, or of specific regions of the template mask with corresponding regions of the incoming document.

Algorithm 2 implements handling of an incoming document based on the matching score, yielding a template_id of a matching template, and a possibly updated template database. Algorithm 2 involves determining a matching score, as yielded from Algorithm 1, of the incoming document with the template masks template of the templates in the template database. When the matching score is above a threshold the template is identified as a matching template, and template_id is set to the ID of the matching template.

If however no matching template is found, then the incoming document is added as a new template to the template database, and a new ID is determined to identify the new template.

In a further embodiment, when a second document matching the previously received document for a template arrives, the second document may also be added to the template, so that the template corresponds to more than one document of a specific sender. In this case, the documents of the template are analyzed to identify regions that are identical for these documents, and these regions are saved as the template mask of the template. Employing a template mask instead of full documents as templates, as in this embodiment, allows for improved template recognition.

This solution hence allows for updating the template detector even during production runs, so that the template database need not contain all templates later needed.

Algorithm 3 relates to constructing, for the generated templates, regular expressions specific for the respective template for extracting fields based on surrounding tokens. For the template, at least two documents falling under the template with raw text and ground truth for extracted fields, such as obtained by manual extraction, are fetched. For fields in a given set of fields to be extracted, the field value is found in raw text of the first document fetched for the given template and a regular expression is constructed using surrounding tokens.

The constructed regular expressions are validated on other documents fetched for the given template and then an accuracy value is constructed. If the accuracy is one, the template and the constructed regular expressions as template-specific extraction rules are added to the templates to be used for production, such as, saved in template database 26.

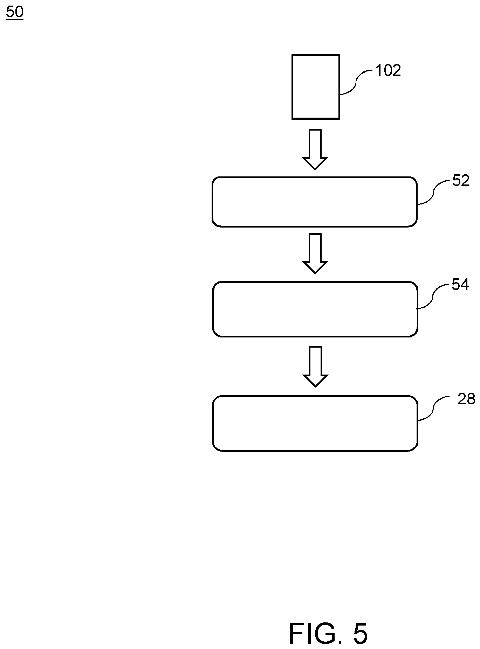

Figure 5 illustrates another embodiment of a system for automatic labelling and automatic detection of templates. Similar to system 20, system 50 comprises feature analyzer 52 to extract features from document 102. System 50 comprises template detector 54, which employs the extracted features to identify a matching template. Template detector 54 implements a learning algorithm that can homogenously sub-group documents in clusters that are as similar as possible, according to a similarity measure such as Euclidean-based distance or correlation-based distance. In an embodiment, an Euclidean distance is employed.

Template detector 56 adds the extracted features of document 102 to a matching cluster, if such a cluster is found. If no matching cluster is found, document 102 is added as a new cluster.

In an embodiment, the clustering algorithm, implemented by template detector 54, is centroid-based. Particularly, the clustering algorithm may be K-means clustering, which is an iterative algorithm that partitions the data set into predefined, distinct and non-overlapping clusters. The clustering algorithm is configured to make the intra-cluster data points as similar as possible, while keeping the clusters as different as possible, according to the similarity measure.

However, K-means clustering cannot easily be used for retraining of an existing model to include new clusters. Employing hierarchical clustering mechanisms is preferable to centroid-based clustering, such as K-means, because adding new clusters to existing groups is supported by hierarchical-based clustering mechanisms in a straightforward manner.

Therefore, in another embodiment, template detector 54 implements BIRCH clustering, which can cluster data by received one by one. Because BIRCH clustering is hierarchical it is highly sensitive to the order of the data records. In the present application, the order of the data is valuable, because the data comprise sequences of RGB values. Moreover, the BIRCH algorithm can efficiently handle the situation of the number of categories K being large, such as more than 100, and the amount of numeric based 1-D data being large.

In BIRCH clustering, the information contained in dense regions is summarized in clustering features, CFs, that form nodes of a CF tree. Each leaf node is a sub-cluster, each non-leaf node contains at most a maximum number of entries. Each leaf node entry contains a pointer to a child node, and a CF made from the sum of the CFs of the child nodes.

In an embodiment, template detector 54 may apply BIRCH clustering employing an average distance between clusters as distance metric, such as an Euclidean distance between centroids of clusters.

In an embodiment, all entries in a leaf node must satisfy a threshold requirement that ensures that the diameter of each leaf entry is less than the threshold. Inserting a new CF entry comprises identifying an appropriate leaf by starting from the root and recursively descending the tree by choosing the closest child node according to the chosen distance metric. When a leaf node is reached, the closest entry is found and a test is made whether the new entry can be absorbed without violating the threshold condition. In this case, the CF entry of the leaf node is updated, otherwise a new CF entry is added to the leaf.

When the leaf cannot accommodate the new entry, the leaf node is split by choosing two entries that are farthest apart, according to the chosen distance metric, and redistributing the remaining entries based on the distance. After inserting a CF entry to a leaf, the CF information for each non-leaf entry on the path between the route to the leaf must be updated, possibly splitting a non-leaf node if it cannot accommodate the new features.

The BIRCH algorithm may employ weak supervision in the form of the number of clusters that the algorithm should distinguish. Accordingly, template detector 54 may receive an input number corresponding to a number of clusters to be formed, such as the number of senders. Then, template detector 54 may apply agglomerative clustering to join clusters until the number of clusters matches the input number, whereby a linkage distance is minimized.

In this embodiment, feature analyzer 52 extracts features of the layout, such as logo, header and footer, and the extracted features are employed to label each document to a particular sender, allowing to infer the number of clusters.

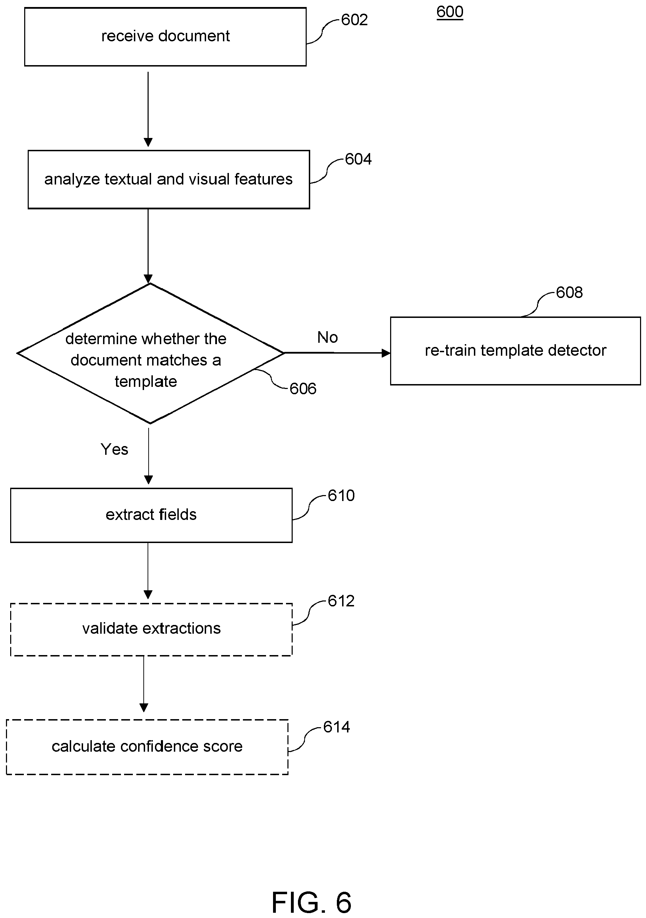

Figure 6 illustrates method 600 for automatic classification of documents and automatic generation of templates. After receiving 602 a document, its textual and visual features are analyzed 604. Analyzing 604 textual and visual features may comprise performing OCR or PDF extraction. Analyzing 604 textual and visual features may further comprise inspecting the header region and/or the footer region and may, for example, include the procedure according to algorithm 1, as described above, and may be performed by feature analyzer 22 or 52. Based on the identified textual and visual features, it is determined 606 whether the document matches a template.

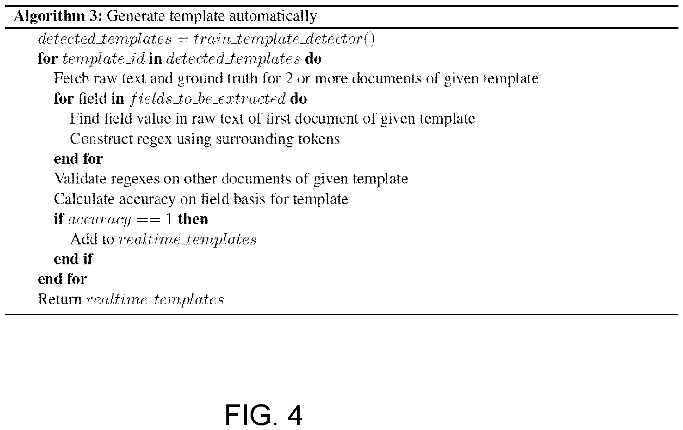

Determining 606 may comprise consulting a template database, such as template database 26, or may comprise walking a hierarchical tree of clustered documents according to a clustering algorithm, such as K-means and BIRCH clustering. If no matching template is identified, method 600 comprises retraining 608 the template detector. Retraining the template detector may include adding the feature to a template database, such as template database 26, as described above. Retraining the template detector may further comprise generating a template including regular expressions for fields, as described above with reference to Figure 4.

In an embodiment where the template detector is implemented with BIRCH clustering, retraining 608 the template detector comprises determining whether the new document can be accomodated in a leaf mode, or whether a new leaf mode must be added.

If it is determined that the document matches a template, regular expressions contained in the template are employed to extract 610 fields, as described above. Method 600 may further comprise validating 612 the extractions. Validating 612 the extractions may comprise applying plausibility verifications, such as verifying that a VAT amount is not larger than the total amount.

In addition, method 600 may comprise calculating 614 a confidence score for the automatic extractions. The confidence score indicates the confidence in the validity of the result. The confidence score, calculated in embodiments, may weigh in towards the recent documents and weigh in towards the number of documents belonging to a template according to

$$w_i = \log(\text{cumsum}(m_i))/\log(\text{dd}_i)$$

$$CS_{\text{field}} = \sum_{i=0}^{N} \text{softmax}(w_i)\, m_i$$

where $w_i$ is the weight, $m_i \in \{0,1\}$ is the matching value, $m_i = 1$ if the extraction matches the true value yielded from manual extraction and $m_i = 0$ otherwise, $\text{dd}_i$ is the date time difference between the document creation date and the current date, cumsum is the cumulative sum of the elements, N is the number of documents that have been extracted and for which user feedback is available, and the resulting value $CS_{\text{field}}$ is calculated per field. In particular, the confidence scores allow for measuring the performance of the extractions not only for samples but also during production, incorporating manual extractions and/or validation of extractions provided by customers of an accounting software that implements the disclosed approaches.

In embodiments, method 600 may further comprise displaying document 102 in a graphical user interface, such as a graphical user interface of an accounting software. In the graphical user interface, document 102 may be displayed with an overlay of extracted values for recognized fields $\text{field}_j$ as delivered by method step 610. Furthermore, the overlay of extracted values may take the value $CS_{\text{field}j}$ for the displayed fields into account, such as by employing color codes that correspond to different ranges of $CS_{\text{field}j}$. The color codes hence guide the user to pay attention to fields most likely to be incorrectly extracted.

Moreover, the graphical user interface allows a user to provide user feedback on the displayed extractions. User feedback may comprise the user submitting an acceptance of extracted values as correct or submitting correct extractions for incorrectly extracted fields.

In an embodiment, method 600 may be performed on the fly as soon as a customer uploads a document to the accounting software such as an online accounting software platform. In embodiments, the accounting software may generate a template database for a new customer as soon as the new customer has finished onboarding to the online accounting software platform.

Table 1: Validation Results for the unsupervised approach

| Approach | Naïve Bayes | Logistic Regression | doc-diff | Unsupervised |
|---|---|---|---|---|
| $F_1$ score | 0.95 | 0.95 | 0.68 | 0.45 |

Table 1 shows validation results of the disclosed systems and methods applied to a batch of 110 randomly selected business documents. The batch of business documents is labeled with 17 labels corresponding to sender names. Table 1 shows the $F_1$ score of the approach described with reference to Figure 2, compared with a Naïve Bayes approach, a logistic aggression approach, and a doc-diff approach. The doc-diff approach is a comparative manual approach that relies on manually labeled document sets to generate templates instead of the unsupervised approach described with reference to Figure 2.

On these metrics, the classic approaches employing Naïve Bayes or Logistic Regression outperform the doc-diff approach and the unsupervised approach. The reason may be that the supervised and unsupervised approaches, as described, rely on having, at the very least, two documents that are similar contextually, so that template specific information can be extracted. However, the validation results of Table 1 rely on a data set that includes randomly selected documents, so that the data set contains documents that have no matching documents that are similar enough to be subsumed under a template.

It is moreover important to note that in the unsupervised approach, no documents from different ground truth templates were matched to a same template, so that the method can be trusted to assign documents to the same template if they actually stem from the template.

Table 2: Validation Results for the clustering

| Method | Classification Accuracy [%] | Silhouette Coefficient | DB Index |
|---|---|---|---|
| K-means | 93.45 | 0.63 | 4.55 |
| Birch | 97.69 | 0.89 | 1.23 |

Table 2 summarizes validation results of approaches employing K-means clustering and BIRCH clustering, as described above with reference to Figure 5.

To produce the results of Table 2, the document corpus was processed to assign three documents for a specific sender to label the template. Roughly 6,000 documents were assigned to 2,000 templates based on the sender. For analysis of textual and visual features, the top 30% of the documents header was taken into consideration, employing RGB values of the image profile of the documents. The number of 30% was determined based on hyper-parameterizing the feature, training the model and testing it on unseen data and forcing false negative classification to templates, to a minimal. Also, the maximum length of a document in the document corpus was taken and a zero padding was applied to the document

As is visible from Table 2, on the validation metrics of classification accuracy, silhouette coefficient and Davies-Bouldin, DB, index, the BIRCH clustering approach outperforms the K-Means clustering approach.

Table 3: Accuracy Results For Field Extractions Using ARG

| Fields | Accuracy Rate [%] |
|---|---|
| Amount | 80 |
| Document Identihcation Number | 77 |
| Document Date | 76 |
| Sender Name | 99 |
| Tax Rate | 96 |

(continued)

| Fields | Accuracy Rate [%] |
|---|---|
| Payment Due Date | 62 |
| IBAN | 60 |
| EU VAT ID | 66 |
| Currency | 93 |
| PaymentState | 73 |
| Document Type | 88 |

Table 3 relates to a further validation result, relating to a comparison of the accuracy of the field extraction with manual extraction. The validation results of Table 3 rely on the hypothesis that if regular expression patterns of the fields to be extracted can be detected for one document falling under a template, the identified field regular expressions should extract the respective fields in all other documents of that template. To validate this hypothesis in Table 3, a number of documents within each template is analyzed, the number of considered documents varying, depending on the template, between $n$ and $n + m$. The first document within these documents of the template is chosen to generate the regular expressions. The generated regular expressions are employed on the remainder of the documents within the template, which are at least n documents, but may also comprise more than n documents. This process is applied across all templates to yield the accuracy rates reported in Table 3. Table 3 shows the aggregate accurate extraction rates for the fields across 1,446 templates and 2,398 documents.

As can be inferred from Table 3, overall the accuracy rates of field values is generally good. Fields such as IBAN and EU VAT ID, in comparison, have lower accuracy rates because these fields are in many cases unavailable in the raw text.

Within the fields that are extracted through information present in the raw text, the field document type is extracted with higher accuracy than the field payment state. The payment state takes the values 'automatic' or 'manual' and, on further investigation, the discrepancy arises from the preference given to the payment state 'manual', as opposed to 'automatic', because an automatic payment state incorrectly extracted as manual has a comparatively low cost impact to *vice versa.* Hence, manual extractors resort to the default payment state of 'manual'.

In the extraction of the 'payment due date', which is based on a template specific regular expression, the process primarily detects an alphanumeric value in a text for the number of days for payment due, and adds it to the extracted 'document date'. If, however, this backup approach also fails, a default of fourteen days is added to the extracted 'document date'. Hence, at least a part of the relatively low accuracy for the extraction of the field 'payment date' seems not to be due to poor performance of the template specific regular expression generation for the field 'payment due date', but due to the inaccuracy of the field extraction of 'document date'.

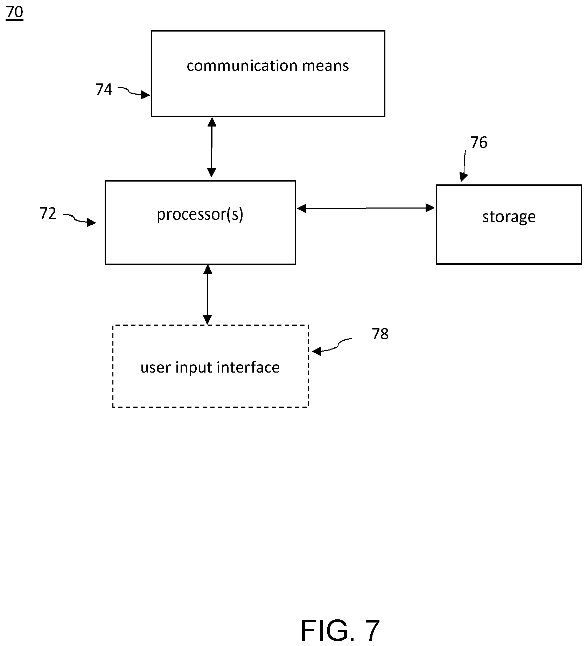

Figure 7 displays components of a computing device 70, which may implement system 20 or 50. Computing device 70 may comprise one or more processors 72 configured for performing method 600. Computing device 70 may comprise user interface 78 for displaying a graphical user interface of an accounting software allowing a user to interact with the extracted fields as described above and/or communication means 74 configured to receive data representing user interaction with the extracted fields. Alternatively computing device 70 may be a server providing an online accounting platform for customers via communication means 74. The online accounting platform may comprise the graphical user interface for inspecting extracted field values and submitting user feedback, as explained above. Computing device 70 may comprise storage 76 storing the template database and a corpus of extracted documents and their ground truth values received from user feedback.

This disclosure proposes breaking down document extraction to the stages of classification of the document, and extraction of its information in assurance of the quality of the extraction. For the document classification stage, a template-based approach is described. For generation of the templates, unsupervised and supervised approaches are described that obviate the need for manual labelling. Template specific generation of regular expressions allows to extract information for 11 fields from a large corpus of documents with an average accuracy rate of 80%. Because the system is configured to be applied to extract sensitive information, confidence scores on extractions are introduced to measure the performance of the extractions in interaction with customers who provide manually performed extractions.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

**Claims**

1. A computer-implemented method for extraction of structured data from unstructured documents, the method comprising:

   receiving (22) a document;
   employing a template detector to determine (24) whether the document matches a template from a plurality of templates; and
   in response to determining that no template matches the document, re-training (26) the template detector to add the document (22) as a new template.

2. The method of claim 1, further comprising, in response to determining that the document matches the template, comparing the document and the template to identify document-specific pixels.

3. The method of claim 2, further comprising recognizing in raw text of the document corresponding to the document-specific pixels a pattern corresponding to a predefined field, and extracting a value for the predefined field.

4. The method of claim 1, wherein the template detector comprises a template database and wherein re-training (26) the template detector comprises adding the document as a new template to the template database.

5. The method of claim 4, wherein determining (24) whether the document matches one of the templates comprises calculating a matching score between the document and templates of the template database, wherein the matching score is based on non-blank regions in the document matching a template mask of the template.

6. The method of claim 5, wherein calculating the matching score between the document and the template comprises determining the matching score as the share of matching pixels in the non-blank regions.

7. The method according to one of claims 4 to 6, wherein calculating the matching score between the document and templates of the template database further comprises determining if the document and a template do not have a same resolution and in response determining the matching score as zero.

8. The method of one of claims 1 to 3, wherein the template detector comprises a tree, wherein leaf nodes of the tree each comprise a plurality of clustering feature entries corresponding to the plurality of templates, wherein determining (24) whether the document matches a template from the plurality of templates comprises finding a closest leaf node for the features of the document and determining whether the document can be subsumed under the leaf node without violating a threshold condition.

9. The method of claim 7, wherein re-training (26) the template detector comprises adding the features of the document to a new leaf node, updating clustering features for all nodes from the new leaf node to the tree root.

10. The method of claim 8 or 9, wherein the tree is constructed employing a BIRCH clustering algorithm.

11. The method of claim 3, wherein recognizing in the raw text of the document the pattern corresponding to a predefined field is based on applying a regular expression specific to the template matching the document.

12. The method of claim 11, wherein the pattern is based on tokens preceding and succeeding the predefined field.

13. The method of claim 3, wherein the predefined field comprises one of an amount, a document identification number, a document date, a sender name, a tax rate, a payment due date, an IBAN, a VAT registration number, a payment state, a document type, or a currency.

14. The method of claim 2, further comprising determining a confidence score for the extracted value.

15. The method of claim 14, further comprising displaying the document and the extracted values in a graphical user interface, wherein displaying the extracted values includes displaying the respective confidence score for each extracted value.

FIG. 1

20

102

26

22

24

28

FIG. 2

---

**Algorithm 1:** Calculate matching score

---

**Input:** $document1$, $document2$
**if** resolution of $document1 \neq$ resolution of $document2$ **then**
    Return 0.0
**else**
    Find common non-blank regions in $document1$ and $document2$ and store in $regions$
    Return share of overlapping pixels in $regions$ for $document1$ and $document2$
**end if**

---

---

**Algorithm 2:** Handle incoming document

---

**Input:** $incoming\_doc$, $threshold$, $template\_database = \{\}$
Initialize $matched\_templates = []$
**for** $template$ in $template\_database$ **do**
    Calculate matching score between $incoming\_doc$ and $template$ and store it in $matching\_score$
    **if** $matching\_score > threshold$ **then**
        Append $template$ to $matched\_templates$
    **end if**
**end for**
**if** $len(matched\_templates) == 0$ **then**
    Add $incoming\_doc$ as new template to $template\_database$
    Set $template\_id$ to new template id
**else if** $len(matched\_templates) == 1$ **then**
    Set $template\_id$ to id of matched template
**else**
    Throw $Exception$
**end if**
Return $template\_id$, $template\_database$

---

# FIG.3

---

**Algorithm 3:** Generate template automatically

---

$detected\_templates = train\_template\_detector()$

**for** $template\_id$ **in** $detected\_templates$ **do**

    Fetch raw text and ground truth for 2 or more documents of given template

    **for** field **in** $fields\_to\_be\_extracted$ **do**

        Find field value in raw text of first document of given template

        Construct regex using surrounding tokens

    **end for**

    Validate regexes on other documents of given template

    Calculate accuracy on field basis for template

    **if** $accuracy == 1$ **then**

        Add to $realtime\_templates$

    **end if**

**end for**

Return $realtime\_templates$

---

# FIG. 4

50

102

52

54

28

FIG. 5

600

```
┌─────────────────────────────┐
│      receive document        │─── 602
└─────────────────────────────┘
                │
                ▼
┌─────────────────────────────┐
│ analyze textual and visual   │─── 604
│         features             │
└─────────────────────────────┘
                │
                ▼
```

determine whether the
document matches a
template ─── 606

No ──────► ┌─────────────────────────────┐
            │   re-train template detector │─── 608
            └─────────────────────────────┘

Yes

```
┌─────────────────────────────┐
│        extract fields        │─── 610
└─────────────────────────────┘
                │
                ▼
┌ ─ ─ ─ ─ ─ ─ ─ ─ ─ ─ ─ ─ ─ ─ ┐
│     validate extractions     │─── 612
└ ─ ─ ─ ─ ─ ─ ─ ─ ─ ─ ─ ─ ─ ─ ┘
                │
                ▼
┌ ─ ─ ─ ─ ─ ─ ─ ─ ─ ─ ─ ─ ─ ─ ┐
│   calculate confidence score │─── 614
└ ─ ─ ─ ─ ─ ─ ─ ─ ─ ─ ─ ─ ─ ─ ┘
```

FIG. 6

<u>70</u>

communication means

74

processor(s)

72

76

storage

78

user input interface

# FIG. 7

Europäisches
Patentamt

European
Patent Office

Office européen
des brevets

# EUROPEAN SEARCH REPORT

Application Number

EP 20 19 0743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/065576 A1 (PADMANABAN VENKATAKRISHNAN [US] ET AL) 27 February 2020 (2020-02-27) * paragraphs [0021] - [0022], [0026], [0029] - [0041], [0043], [0048] - [0050]; figure 3 * ----- | 1-15 | INV. G06F16/35 G06F16/93 G06K9/00 |
| X | US 2009/092320 A1 (BERARD JEAN-JACQUES [FR] ET AL) 9 April 2009 (2009-04-09) * paragraphs [0005] - [0009], [0031] - [0032], [0034] - [0037], [0040] - [0041]; figures 2, 3B-3C,4 * ----- | 1-15 | |
| X | US 2019/286692 A1 (ODATE RYOSUKE [JP] ET AL) 19 September 2019 (2019-09-19) * paragraphs [0015], [0118] - [0127]; figures 4,8 * ----- | 1-15 | |
| A | Anonymous: "BIRCH - Wikipedia", , 30 March 2020 (2020-03-30), XP055750019, Retrieved from the Internet: URL:https://en.wikipedia.org/w/index.php?title=BIRCH&oldid=948081365 [retrieved on 2020-11-12] * the whole document * ----- | 8-10 | TECHNICAL FIELDS SEARCHED (IPC) G06F G06K |

The present search report has been drawn up for all claims

| Place of search | Date of completion of the search | Examiner |
|---|---|---|
| The Hague | 26 November 2020 | Bercan, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 0743

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2020

| Patent document cited in search report | | Publication date | Patent family member(s) | | Publication date |
|---|---|---|---|---|---|
| US 2020065576 | A1 | 27-02-2020 | NONE | | |
| US 2009092320 | A1 | 09-04-2009 | NONE | | |
| US 2019286692 | A1 | 19-09-2019 | CN | 110276236 A | 24-09-2019 |
| | | | JP | 2019159898 A | 19-09-2019 |
| | | | US | 2019286692 A1 | 19-09-2019 |

EPO FORM P0459

For more details about this annex : see Official Journal of the European Patent Office, No. 12/82

**REFERENCES CITED IN THE DESCRIPTION**

**Non-patent literature cited in the description**

- **STÖCKERL et al.** Online template matching over a stream of digitized documents. *ACM International Conference Proceeding Series,* 2015
- **KUMAR et al.** Structural similarity for document image classification and retrievaf. *Pattern Recognition Letters,* vol. 43 (1), 119-1026
- **N. REVATHI.** *Web Text Classification Using Genetic Algorithm and a Dynamic Neural Network Modef,* vol. 2 (2), 436-442
- **RASMUS BERG PALM et al.** CloudScan - A configuration-free invoice analysis system using recurrent neural networks. *CoRR, abs/1708.07403. 2017*
- **ANOOP R. KATTI.** Chargrid: Towards understanding 2d documents. *CoRR, abs/1809.08799.2018*
- **SIYUAN CHEN.** *Structured document classification by matching local salient features,* 653-656
- **JAYANT KUMAR.** *Structural similarity for document image classification and retrievaf*
- **ALBERT GORDO et al.** Large-scale document image retrieval and classification with runlength histograms and binary embeddings. *Pattern Recognition,* vol. 46, 1898-1905
- **SCHUSTER et al.** Intellix - end-user trained information extraction for document archiving. *ITESOFT,* 2013
- **RUSINOL et al.** *Field extraction from administrative documents by incremental structural templates,* 1100-1104
- **ANDREAS DENGEL ; BERTIN KLEIN.** *smartFIX: A requirements-driven system for document analysis and understanding*
- **FRANCESCA CESARINI et al.** Analysis and understanding of multi-class invoices. *IJDAR,* vol. 6, 102-114
- **ERIC MEDVET et al.** A probabilistic approach to printed document understanding. *IJDAR,* vol. 14, 335-347